# EUROPEAN PATENT APPLICATION

(11) **EP 1 870 752 A1**
(43) Date of publication of application: **26.12.2007**
(21) Application number: 07011993.8
(22) Date of filing: 19.06.2007
(51) Int. Cl.: G02B 7/00, G02B 21/28, G02B 21/30

(54) **Lens housing with integrated thermal management**

(30) Priority: 19.06.2006 US 471060
(71) Applicant: CREDENCE SYSTEMS CORPORATION, Milpitas, CA 95035 (US)
(72) Inventor: Lee, Birk, Atherton CA 94025 (US)
(74) Representative: Leidescher, Thomas

(57) **Abstract**

An optical receiver is provided, which includes a housing, an objective lens (120) situated in the housing, a solid immersion lens (SIL) (126; 226; 326; 426; 526; 626) mounted onto the housing, and thermal management element affixed to the housing to control the temperature of the SIL. The thermal management apparatus or element may be a coolant conduit (214; 3145; 414; 514; 614), a thermoelectric cooling (TEC) device (316; 416; 516), etc. A coolant spray may also be provided to spray the imaged specimen.

## Description

The present invention relates to a system for housing optical lenses while providing thermal control.

Various microscopes are used in the art for imaging, testing, and examination of various microstructures. A common feature of these microscopes is that the obtained resolution depends on efficient collection of light from the inspected object. It has been known in the art to enhance the collection efficiency by using index matching fluid or a solid immersion lens (SIL) in conjunction with an objective lens.

While collection efficiency is highly important for many types of microscopes, it is imperative in one particular field: probing and testing of semiconductor microchips. Microchips need to be tested during the design and during the manufacturing stages. Various probing devices use light reflected or emitted from the microchip. One example of testing device relies on light emission from the microchip that is generated whenever a device, e.g., a transistor, on the microchip changes state, while another directs a laser beam onto the microchip and detects modulations in the reflected light. Regardless of the device and probing method used, the use of a SIL can facilitate improved collection efficiency.

During various testing of the microchip, as described above, various test signals are applied to the microchip to stimulate the microchip to perform various operations. Consequently, the microchip temperature is elevated, which may lead to premature failure of the microchip or to skewed test results. Therefore, it would be beneficial if the temperature of the microchip can be controlled.
In light of the above, an optical receiver assembly according to independent claim 1 and a method for imaging a semiconductor device under test (DUT) according to independent claim 12 are provided.
Further advantages, features, aspects and details of the invention are evident from the dependent claims, the description and the drawings.

The present invention provides an optical probing system and method that enables efficient light collection while enabling thermal management of the specimen.

In one aspect of the invention, an optical prober or receiver is provided, which includes a housing, an objective lens situated in the housing, a SIL mounted onto the housing, and thermal management element affixed to the housing. The thermal management element varies the temperature of the housing so as to indirectly vary the temperature of the SIL.

In one aspect of the invention the thermal management element is a conduit in physical contact with the housing and having fluid circulating therein.

In a further aspect of the invention, the thermal management element is a heat exchanger, such as a resistive element, a thermoelectric cooling (TEC) device, etc., affixed to the housing.

According to a particular feature of the invention, the thermal management element is a heat exchanger, such as a resistive element, a thermoelectric cooling (TEC) device, in combination with a conduit having fluid circulating therein.

In one aspect of the invention, a SIL housing is movably mounted onto an objective lens housing and the thermal management element is attached to the SIL housing.

According to another aspect of the invention, a method for imaging a semiconductor device under test (DUT) is provided. The method entails providing test signals to the DUT; contacting the DUT with a solid immersion lens (SIL); and, cooling the SIL. According to one aspect, the SIL is cooled by circulating coolant fluid in a conduit affixed to a housing of the SIL.
Embodiments are also directed to apparatuses for carrying out the disclosed methods and including apparatus parts for performing described method steps. Furthermore, embodiments are also directed to methods by which the described apparatus operates or by which the described apparatus is manufactured. It may include method steps for carrying out functions of the apparatus or manufacturing parts of the apparatus. The method steps may be performed by way of hardware components, firmware, a computer programmed by appropriate software, by any combination thereof or in any other manner.

The invention is described herein with reference to particular embodiments thereof which are exemplified in the drawings. It should be understood, however, that the various embodiments depicted in the drawings are only exemplary and may not limit the invention as defined in the appended claims.

Figure 1 is general schematics depicting an optical receiver according to an embodiment of the invention.

Figure 2A illustrates a side elevation while Figure 2B illustrates a top elevation of an embodiment of the invention that may be used with the optical head of Figure 1.

Figure 3 is a cross-section depicting another embodiment of the invention.

Figure 4 depicts another embodiment of the invention.

Figure 5 depicts yet another embodiment of the invention using a TEC device.

Figure 6 depicts another embodiment of the invention wherein the objective housing is composed of two parts.

The present invention provides an optical system for collecting light from a specimen using a SIL and temperature control. The system can be used with various arrangements of collection optics, and is especially beneficial for use in microscopes designed for detection of faint light emissions, such as from microchips, commonly referred to device under test (DUT). Various embodiments of the invention are particularly useful for imaging a specimen with a SIL and when control of the specimen temperature is important.

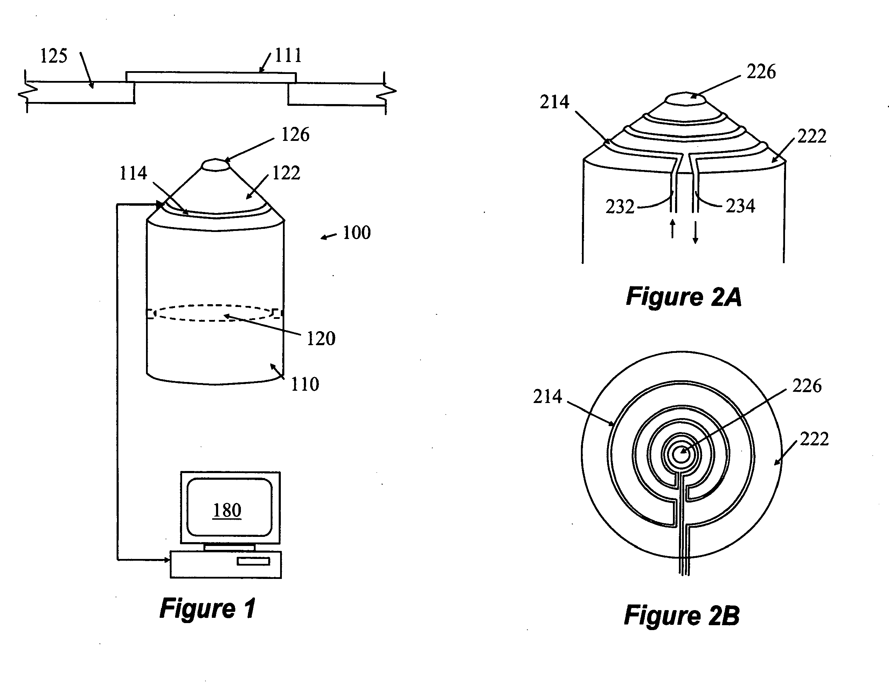

Figure 1 is a general schematic depicting the major components of an embodiment of the invention, in conjunction with a specimen 111 to be imaged. In Figure 1, the specimen, e.g., DUT 111, is mounted onto a carrier 125, such as a DUT adapter or load board, etc. The optical collection system 100 comprises an objective lens housing 110, wherein an objective 120 is situated. A SIL is mounted onto the tip of the cone section 122 of the objective housing 110. During imaging, the SIL is "coupled" to the specimen so as to capture evanescence wave. In other words, the SIL is coupled to the specimen so that it captures rays propagating in die specimen at angles higher than the critical angle (the critical angle is that at which total internal reflection occurs). As is known in the art, die coupling can be achieved by, for example, physical contact with the imaged object, very close placement (up to about 200 nanometers) to die object, or the use of index matching material or fluid.

The present inventor, however, made the observation that when the SIL 126 is coupled to the specimen 111, especially a DUT, it creates a zone of temperature gradient in the DUT such that the temperature is not uniform across the DUT. This is particularly detrimental when the DUT is stimulated for testing purposes, as the temperature gradient may alter the testing results. Accordingly, the inventor has devised various methods to reduce or avoid the temperature gradient. As shown, the upper cone section 122 of housing 120 includes a temperature control element 114, the operation of which is controlled by controller 180, such as, e.g., a specifically programmed general purpose computer. Alternatively, the temperature control element may be controlled by a specifically designed control circuit, software, or combinations thereof. The temperature control element may be a heating element, a cooling element, or both. Various examples for the temperature control element will be provided further below, but these examples are not meant to limit the invention and other temperature control elements may be used.

Figure 2A illustrates a side elevation while Figure 2B illustrates a top elevation of an embodiment of the invention that may be used with the optical head of Figure 1. As shown in Figures 2A and 2B, the conical section 222 is fitted with a tubing or conduit 214, which in this embodiment is made of a thermally conductive material, such as copper, and is physically contacting the conical section 222 by, e.g., soldiering. The tubing is provided with an inlet 232 and outlet 234, via which fluid is made to flow. The fluid is conditioned to a desired temperature and pressure, so that it controls the temperature of the conical section 222, and thereby controls the temperature of the SIL 226. Thus, for example, if the SIL draws heat from the DUT and thereby creates a drop in temperature at the location of contact with the DUT, the fluid is heated so as to elevate the temperature of the SIL. Similarly, when the SIL needs to be cooled, a coolant is circulated in the tubing 214 so as to cool the cone section 222, and thereby cool the SIL. As can be understood, while the tubing 214 is shown affixed to the external surface of the conical section 222, the same effect can be achieved by affixing the tubing 214 to the inside surface of the conical section 222. As can be understood, the temperature of the SIL can be controlled by varying the temperature and/or pressure of the coolant fluid.

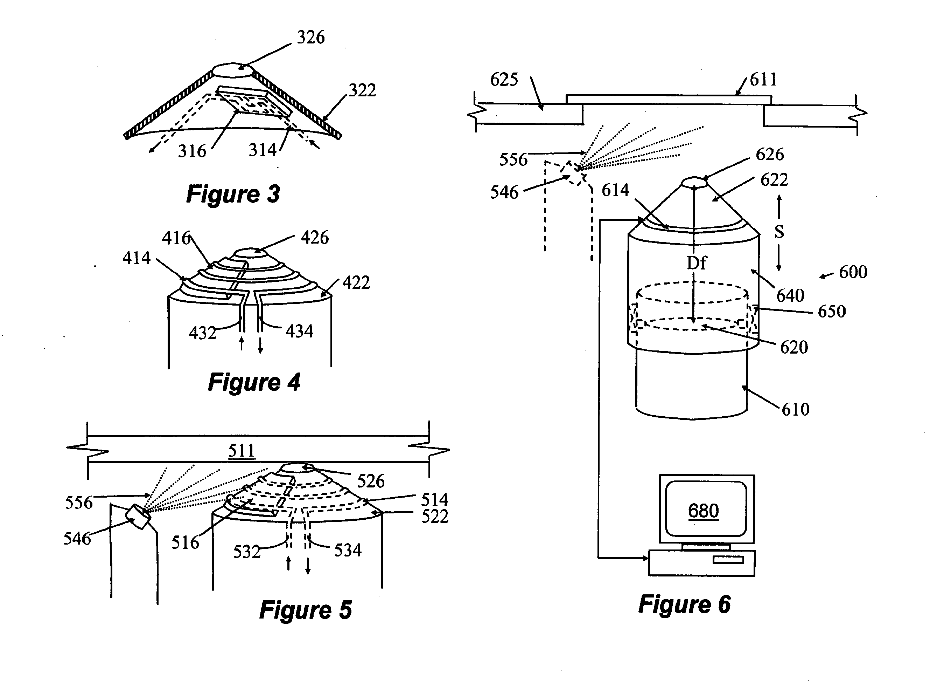

Figure 3 is a cross-section depicting another embodiment of the invention. Notably, Figure 3 depicts a cross section of conical section 322 of an objective housing, such as that shown in Figure 1. The SIL 326 is shown atop of conical section 322. In this embodiment, a heat exchanger 316, such as a resistive device or a thermoelectric cooling (TEC) device is affixed to the inside of the conical section 322, although it could also be affixed to the outside surface, or to both. As is known, thermoelectric cooling uses the Peltier effect to create a heat flux between the junction of two different types of materials. In this manner, the temperature of the conical section 322 can be controlled, thereby controlling the temperature of SIL 326. As is shown, optionally conduit 314 is provided through which fluid is circulated so as to function as a heat sink or source to the heat exchanging device 316.

Figure 4 depicts another embodiment of the invention. Notably, in Figure 4, a TEC 416 is affixed to the outer surface of the conical section 422. Piping or conduit 414 is provided in physical contact with the TEC so as to form thermally conductive contact. Fluid is circulated within the piping 414 via inlet 432 and outlet 434. The piping 414 with the circulating fluid form a heat sink or source to the TEC. In this manner, the temperature of the conical section 422 is controlled, thereby controlling the temperature of the SIL 426.

Figure 5 depicts yet another embodiment of the invention using a TEC. In this embodiment, the TEC 516 is affixed to the outer surface of the cone section 522. In this embodiment, the optical system is used to inspect a specimen 511, such as a DUT, which is cooled by way of a spray jet 556 emitted from one or more injectors 546. Injectors 546 may be constructed in the form of atomizers that provide a fine mist or fine spray of coolant fluid onto the specimen 511. In such an embodiment, the contact of SIL 526 with specimen 511 may cause a temperature gradient as the SIL may prevent coolant from reaching the contact area, and the SIL may also act as a heat sink/source at the point of contact. Therefore, the area about the point of contact may have a temperature gradient with respect to the rest of the specimen. To reduce or avoid such a gradient, the temperature of the SIL should be brought close to the temperature of the specimen 511, as conditioned by the coolant spray 556. In this embodiment this is done by the TEC. As shown in Figure 5, the coolant spray 556 itself can act as a heat sink/source for the TEC. Alternatively and optionally, if a stronger heat sink/source is needed, piping 514 can be added, much as shown in the embodiment of Figure 4.

Figure 6 depicts another embodiment of the invention. In figure 6 the optical receiver 600 is composed of two parts: objective lens housing 610 and SIL housing 640, which is slidably coupled to objective housing 610, as shown by double-arrow S. That is, the SIL housing 640 can slide over the objective housing 610 so that the distance Df can be varies so as to, e.g., obtain a better focus. In one optional embodiment, the SIL housing 640 is resiliently biased with respect to objective housing 610. This can be done by, e.g., spring 650 or other resilient means. The conical section 622 includes a thermal management apparatus 614 that may be chosen from any of the embodiments described above or other operative means to control the temperature of conical section 622 and thereby control the temperature of SIL 626. As is shown, the embodiment of Figure 6 can be implemented with or without coolant spray 556 from injector 546.
According to some embodiments described herein, an optical receiver is provided, which can include a housing, an objective lens situated in the housing, a solid immersion lens (SIL) mounted onto the housing, and thermal management element affixed to the housing to control the temperature of the SIL. The thermal management apparatus or element may be a coolant conduit, a thermoelectric cooling (TEC) device (316; 416; 516), etc. A coolant spray may also be provided to spray the imaged specimen.

While the invention has been described with reference to particular embodiments thereof, it is not limited to those embodiments. Specifically, various variations and modifications may be implemented by those of ordinary skill in the art without departing from the invention's spirit and scope, as defined by the appended claims. Any cited prior art reference is incorporated herein by reference.

## Claims

1. An optical receiver assembly, comprising:
an objective lens housing (110);
an objective lens (120; 620) mounted within said objective lens housing;
a solid immersion lens (126; 226; 326; 426; 526; 626) mounted onto said objective lens housing;
a thermal management apparatus or a thermal management element affixed to a surface of said objective lens housing.

2. The assembly of claim 1, wherein said thermal management apparatus or said thermal management element comprises tubing (214; 314; 414; 514; 614) affixed to said surface and having fluid circulating therein.

3. The assembly of claim 2, wherein said fluid is a coolant fluid.

4. The assembly of any of claims 1 to 3, wherein said thermal management apparatus or said thermal management element comprises a thermoelectric cooling (TEC) device.

5. The assembly of claim 4, wherein said thermal management apparatus or said thermal management element further comprises tubing (414; 514) in physical contact with said TEC and having fluid circulated therein.

6. The assembly of any of claims 1 to 5, wherein said objective housing comprises a base housing having the objective lens mounted therein and a SIL housing (640) having the SIL (626) mounted thereupon, and wherein said SIL housing is slidably coupled to said base housing.

7. The assembly of claim 6, wherein said SIL housing (640) is resiliently attached to said base housing.

8. The optical receiver assembly according to any of the preceding claims being for imaging a specimen, further comprising:
an injector (546) injecting fluid onto said specimen.

9. The assembly of any of claims 1 to 8, wherein said thermal management apparatus or said thermal management element is configured to control the temperature of the SIL (126; 226; 326; 426; 526; 626) by varying the temperature of the objective housing.

10. The assembly of claim 3, wherein said thermal management apparatus or said thermal management element comprises tubing (214; 314; 414; 514; 614) affixed to said surface and having said coolant fluid circulating therein.

11. The assembly of any of claims 1 to 10, further comprising a controller (180; 680) controlling the operation of said thermal management apparatus or said thermal management element so as to control the temperature of the SIL (126; 226; 326; 426; 526; 626) by varying the temperature of the objective housing.

12. A method for imaging a semiconductor device under test (DUT) (111), comprising:
providing test signals to said DUT;
contacting said DUT with a solid immersion lens (SIL) (126; 226; 326; 426; 526; 626); and,
cooling said SIL.

13. The method of claim 12, further comprising spraying said DUT with a cooling fluid.

14. The method of any of claims 12 to 13, further comprising circulating coolant fluid in a conduit affixed to a housing of said SIL.

15. The method of claim 14, further comprising varying the pressure of said coolant fluid so as to control the temperature of said SIL.

16. The method of any of claims 14 to 15, further comprising varying the temperature of said coolant fluid so as to control the temperature of said SIL.
